# EUROPEAN PATENT SPECIFICATION

(11) **EP 0 591 556 B1**
(45) Date of publication and mention of the grant of the patent: **27.11.1996**
(21) Application number: 93909424.9
(22) Date of filing: 27.04.1993
(51) Int. Cl.: C08F 2/22, B01J 19/18, B01F 15/00

(54) **METHOD OF PRODUCING POLYMERIC LATEX**
VERFAHREN ZUR HERSTELLUNG VON POLYMERLATEX
PROCEDE DE PRODUCTION CONCERNANT UN LATEX POLYMERE

(30) Priority: 28.04.1992 JP 136252/92
(43) Date of publication of application: 13.04.1994
(73) Proprietor: SUMITOMO DOW LIMITED, Osaka-shi, Osaka 530 (JP)
(72) Inventor: KURITA, Seiji, Niihama-shi, Ehime 792 (JP); SUZUKI, Kohji, Niihama-shi, Ehime 792 (JP); NAKANO, Masao, Niihama-shi, Ehime 792 (JP); MARUO, Kenji, Niihama-shi, Ehime 792 (JP)
(74) Representative: Kraus, Walter, Dr.
(86) International application number: JP9300542
(87) International publication number: WO9322350

(56) References cited:
- EP-A- 0 470 493
- JP-A-50 095 859
- JP-A-60 071 030
- US-A- 3 991 137
- US-A- 4 613 650

## Description

### FIELD OF THE INVENTION

The present invention relates to a process for producing a polymer latex. More particularly, the present invention relates to a process for producing a polymer latex in which formation of fine coagulates during polymerization is suppressed by the use of a reactor equipped with specific agitation blades, whereby a polymer latex having excellent polymerization stability is obtained.

### DESCRIPTION OF THE PRIOR ART

Hitherto, a diene polymer latex such as a polybutadiene latex, a styrene-butadiene copolymer latex, an acrylonitrile-butadiene copolymer latex, a carboxylic acid or vinylpyridine-modified styrene-butadiene copolymer latex and the like is widely used as a binder for paper coating, fiber treatment or tire cord treatment, and further as a rubber component of a rubber-reinforced resin.

In the production of such polymer latex, a polymerization formulation is defined according to a kind of monomer or monomers, a polymerization process, a viscosity of polymerization system, and the like. In any case, formation of fine coagulates is a problem.

The fine coagulates reduce the productivity and have adverse influence on the quality of produced polymer latex. Then, various investigations have been made to suppress the formation of fine coagulates.

For example, the formation of fine coagulates can be suppressed to some extent by the increase of a ratio of polymerization water to the monomer or the increase of an amount of an emulsifier which is used to stabilize the latex particles. However, the increase of polymerization water decreases a content of the produced polymer in the latex, which results in the decrease of productivity inevitably. To increase the productivity, a reaction vessel is being made large. However, it is difficult to produce a polymer latex having a uniform property or composition by the simple increase of a volume of the reaction vessel.

The increase of the amount of emulsifier will cause various troubles due to the emulsifier in a final product. Hitherto, there has been found no fundamental solution to the above problem.

### SUMMARY OF THE INVENTION

The present inventors studied the above problem and made research with paying attention to an agitation blade which is equipped in a polymerization reactor. As the result, it has been found that the above problem can be solved by the use of a polymerization reactor equipped with specific agitation blades, and even when an amount of emulsifier is small or the polymerization reactor has a large volume of, for example, at least 40 m³, the formation of fine coagulates is suppressed and a polymer latex having excellent polymerization stability can be obtained, and the present invention has been completed.

The present invention provides a process for producing a polymer latex comprising emulsion polymerization of a polymerizable monomer using a polymerization reactor in which an agitation axis 1 that is rotatable from outside of the reactor is installed at a center of said reactor, a bottom paddle 2 having a sweep back angle α of 30 to 60° at its tip end is attached to said agitation axis 1 and installed in a bottom part of the reactor so that its lower edge is close to a bottom wall of the reactor, a flat paddle 3 having a plateform fin 4 a tip end of which extends downward is attached to said agitation axis 1 at a position above said bottom paddle 2 at a crossing angle β of 40 to 100° with said bottom paddle 2, and at least two baffles 5 extending from the upper part to the lower part of said reactor are provided with a distance on a side wall of said reactor along a direction of said agitation axis.

### BRIEF DESCRIPTION OF DRAWINGS

Fig. 1 is a partly broken perspective view of a polymerization reactor equipped with the specific agitation blades used in Examples 1-8 according to the present invention,
Fig. 2 is a partly broken perspective view of a polymerization reactor equipped with three turbine blades used in Comparative Examples 1 and 3, and
Fig. 3 is a partly broken perspective view of a polymerization reactor equipped with three paddle blades used in Comparative Examples 2 and 4.

### DETAILED DESCRIPTION OF THE INVENTION

The present invention will be explained in detail.

Examples of the polymerizable monomer to be used in the present invention are conjugated diene monomers, ethylenically unsaturated carboxylic acid monomers, aromatic vinyl monomers, vinyl cyanide monomers, alkyl unsaturated carboxylate monomers, unsaturated monomers having a hydroxyalkyl group, unsaturated carboxylic acid amide monomers, maleimide monomers, and the like.

Specific examples of the conjugated diene monomer are 1,3-butadiene, 2-methyl-1,3-butadiene, 2,3-dimethyl-1,3-butadiene, 2-chloro-1,3-butadiene, substituted linear conjugated pentadienes, substituted and side-chained conjugated hexadienes, and the like They may be used independently or in the form of a mixture of two or more of them. In particular, 1,3-butadiene is preferred.

Specific examples of the aromatic vinyl monomer are styrene, α-methylstyrene, methyl-α-methylstyrene, vinyltoluene, divinylbenzene and the like. They may be used independently or in the form of a mixture of two or more of them. In particular, styrene is preferred.

Specific examples of the vinyl cyanide monomer are acrylonitrile, methacrylonitrile, α-chloroacrylonitrile, α-ethylacrylonitrile and the like. They may be used independently or in the form of a mixture of two or more of them. In particular, acrylonitrile is preferred.

Specific examples of the ethylenically unsaturated carboxylic acid monomer are mono- and dicarboxylic acids such as acrylic acid, methacrylic acid, crotonic acid, maleic acid, fumaric acid, itaconic acid, etc. and their anhydrides. They may be used independently or in the form of a mixture of two or more of them. In particular, the mono- and dicarboxylic acids are preferred.

Specific examples of the alkyl unsaturated carboxylate are methyl acrylate, methyl methacrylate, ethyl acrylate, ethyl methacrylate, butyl acrylate, glycidyl methacrylate, dimethyl fumarate, diethyl fumarate, dimethyl maleate, diethyl maleate, dimethyl itaconate, monomethyl fumarate, monoethyl fumarate, 2-ethylhexyl acrylate and the like. They may be used independently or in the form of a mixture of two or more of them. In particular, methyl methacrylate is preferred.

Specific examples of the unsaturated monomer having the hydroxyalkyl group are β-hydroxyethyl acrylate, β-hydroxyethyl methacrylate, hydroxypropyl acrylate, hydroxypropyl methacrylate, hydroxybutyl acrylate, hydroxybutyl methacrylate, 3-chloro-2-hydroxypropyl methacrylate, di(ethylene glycol) maleate, di(ethylene glycol) itaconate, 2-hydroxyethyl maleate, bis(2-hydroxyethyl) maleate, 2-hydroxyethylmethyl fumarate, and the like. They may be used independently or in the form of a mixture of two or more of them. In particular, β-hydroxyethyl acrylate is preferred.

Specific examples of the unsaturated carboxylic acid amide monomer are acrylamide, methacrylamide, N-methylolacryl-amide, N-methylolmethacrylamide, N,N-dimethylacrylamide and the like. They may be used independently or in the form of a mixture of two or more of them. In particular, acrylamide is preferred.

Specific examples of the maleimide monomer are maleimide, N-phenylmaleimide, N-methylmaleimide, N-cyclohexylmaleimide and the like. They may be used independently or in the form of a mixture of two or more of them. In particular, N-phenylmaleimide is preferred.

In addition to the above monomers, any monomer that is used in the emulsion polymerization such as ethylene, propylene, vinyl acetate, vinyl propionate, vinylpyridine, vinyl chloride, vinylidene chloride and the like may be used.

Among the above monomers, the conjugated diene monomer alone or a combination of the conjugated diene and a monomer copolymerizable therewith is preferably used. In particular, it is preferable to use a monomer mixture comprising 10 to 80 % by weight of the conjugated diene monomer, 0.5 to 10 % by weight of the ethylenically unsaturated carboxylic acid monomer and 10 to 89.5 % by weight of a monomer copolymerizable with these two monomers, most preferably at least one monomer selected from the group consisting of the aromatic vinyl monomers, the vinyl cyanide monomers, the alkyl unsaturated carboxylate monomers, the unsaturated monomers having the hydroxyalkyl group, the unsaturated carboxylic acid amide monomers and the maleimide monomers.

An average particle size of the produced polymer latex is not limited. It is preferably from 70 to 300 nm. A gel content in the polymer latex is not limited either. It is preferably from 20 to 90 % by weight. When, the polymer latex is used as a paper coating binder for an offset printing paper, the gel content is preferably from 20 to 60 % by weight.

The process of the present invention includes emulsion polymerization of the above monomer or monomers in the presence of a rubbery polymer latex.

As a rubbery polymer latex, a latex of any rubbery polymer such as polybutadiene, a styrene-butadiene copolymer, an acrylonitrile-butadiene copolymer, an ethylene-propylene copolymer, an acrylate copolymer and the like may be used.

As the polymerizable monomer to be polymerized in the presence of the rubbery polymer latex, any of the above exemplified monomers can be used. In particular, it is preferable to use at least one monomer selected from the group consisting of the aromatic vinyl monomers, the vinyl cyanide monomers, the ethylenically unsaturated carboxylic acid monomers, the alkyl unsaturated carboxylate monomers and the maleimide monomers.

The polymerization reactor which is used in the production of polymer latex according to the present invention will be explained.

In the polymerization reactor, an agitation axis 1 that is rotatable from outside of the reactor is installed at a center of said reactor, a bottom paddle 2 having a sweep back angle α of 30 to 60° at its tip end is attached to said agitation axis 1 and installed in a bottom part of the reactor so that its lower edge is close to a bottom wall of the reactor, a flat paddle 3 having a plate-form fin 4 a tip end of which extends downward is attached to said agitation axis 1 at a position above said bottom paddle 2 at a crossing angle β of 40 to 100°, preferably 40 to 70° with said bottom paddle 2, and at least two baffles 5 extending from the upper part to the lower part of said reactor are provided with a distance on a side wall of said reactor along a direction of said agitation axis.

The baffles 5 may have a cooling function by passing cooling water therein.

Using the specific polymerization reactor defined by the present invention, the fine coagulates are less formed and the more stable polymer latex is obtained than the emulsion polymerization using the conventional polymerization reactor.

The effect of the present invention is significant when the polymerization reactor has an internal volume of at least 30 m³, preferably at least 40 m³.

This volume of reactor is fairly large in comparison with not only a laboratory scale reactor but also an industrial scale production reactor of 1 to 20 m³. Therefore, the process of the present invention is very advantageous in the industrial production.

In the present invention, a manner of addition of various components (the monomer or monomers and/or the rubbery polymer latex) is not critical. They may be added at one time, portion wise or continuously.

In the present invention, a single step, two step or multistep polymerization can be used.

When the polymer latex is produced by the emulsion polymerization according to the present invention, a conventional emulsifier, polymerization initiator, electrolyte, chain transfer agent, polymerization accelerator, chelating agent or the like can be used.

Specific examples of the emulsifier are anionic surfactants such as salts of sulfate esters of higher alcohols, alkylbenzenesulfonic acid salts, alkyldiphenylethersulfonic acid salts, aliphatic sulfonic acid salts, salts of sulfate esters of nonionic surfactants and so on; nonionic surfactants such as alkyl esters of polyethylene glycol, alkyl phenyl ethers, alkyl ethers and so on, and mixtures of two or more of them.

Since the above emulsifier may have some adverse effect on the final product, its amount should be made as small as possible. However, too small amount of the emulsifier may decrease the polymerization stability.

In the present invention, the sufficient polymerization stability is achieved, when the emulsifier is used in an amount of 1.0 parts by weight or less, in particular 0.7 parts by weight or less per 100 parts by weight of the monomer(s).

Specific examples of the polymerization initiator are water-soluble polymerization initiators such as potassium persulfate, ammonium persulfate, sodium persulfate and so on, redox polymerization initiators, oil-soluble polymerization initiators such as benzoyl peroxide and so on.

Specific examples of the chain transfer agent are alkylmercaptans such as n-hexylmercaptan, n-octylmercaptan, tert.-octylmercaptan, n-dodecylmercaptan, tert.-dodecylmercaptan, n-stearylmercaptan and so on; xanthogen compounds such as dimethylxanthogen disulfide, diisopropylxanthogen disulfide and so on; α-methylstyrene dimer, terpinolene, thiuram compounds such as tetramethylthiuram disulfide, tetraethylthiuram disulfide, tetramethylthiuram monosulfide and so on; phenol compounds such as 2,6-di-tert.-butyl-4-methylphenol, styrenated phenol and so on; allyl compounds such as allyl alcohol; halohydrocarbons such as dichloromethane, dibromomethane, carbon tetrachloride,carbon tetrabromide and so on; vinyl ethers such as α-benzyloxystyrene, α-benzyloxyacrylonitrile, α-benzyloxyacrylamide; triphenylethane, pentaphenylethane, acrolein, methacrolein, thioglycolic acid, thiomalic acid, 2-ethylhexyl thioglycolate, and the like. They may be used independently or in the form of a mixture of two or more of them.

In the above emulsion polymerization, the polymerization may be carried out in the presence of a cyclic unsaturated hydrocarbon having an unsaturated bond in a ring such as cyclopentene, cyclohexene, cycloheptene, 4-methylcyclohexene, 1-methylcyclohexene, etc. or a hydrocarbon such as benzene, toluene, hexane, cyclohexane, etc.

An amount of such hydrocarbon is from 0.1 to 30 parts by weight per 100 parts by weight of the monomer(s).

In particular, the polymer latex comprising the conjugated diene monomer is used as a paper coating adhesive, a lining adhesive of tufted carpet or needle punch carpet, an adhesive for rock fiber which is used as a cushioning material for an automobile, a mat for construction or an industrial filter, an adhesive for wood to be used as a plywood or a decorative laminated sheet, or as a raw material rubber latex used in the production of ABS resins.

The polymer latex which is produced using the rubbery polymer latex is salted out and dried and recovered in the form of powder or pellets, and used widely as a material of an exterior or interior part of an automobile or a light electrical appliance.

### EXAMPLES

The present invention will be explained further in detail by the following examples, which do not limit the present invention. In Examples, "part" and "%" are by weight. When 45 m³ reactor was used, a total volume of charged materials including water was 43 m³.

In Examples, the properties are measured as follows:

### Average particle size

Using an electron microscope, each particle size of 500 particles is measured and a number average particle size is calculated.

### Gel content

A latex is dried at room temperature to form a latex film. Then, about 0.2 to 0.3 g of the latex film is precisely weighed. After dipping the film in 200 cc of toluene for 48 hours, the toluene solution was filtered through a wire mesh of 300 mesh. The residue on the wire mesh (materials undissolved in toluene) is dried and weighed. A percentage of the weight of residue based on the film weight before dipping in toluene is calculated as a gel content.

### Polymerization stability

An amount of coagulates is measured and deposition of the coagulates on the inner wall of reactor and the agitation blades is observed to evaluated the polymerization stability totally. The amount of coagulates is measured by filtrating the latex through a wire mesh of 300 mesh, drying the wire mesh, weighing the coagulates on the mesh and calculating the weight of coagulate per 100 g of the latex (solid component).

### Example 1

### Preparation of copolymer latex

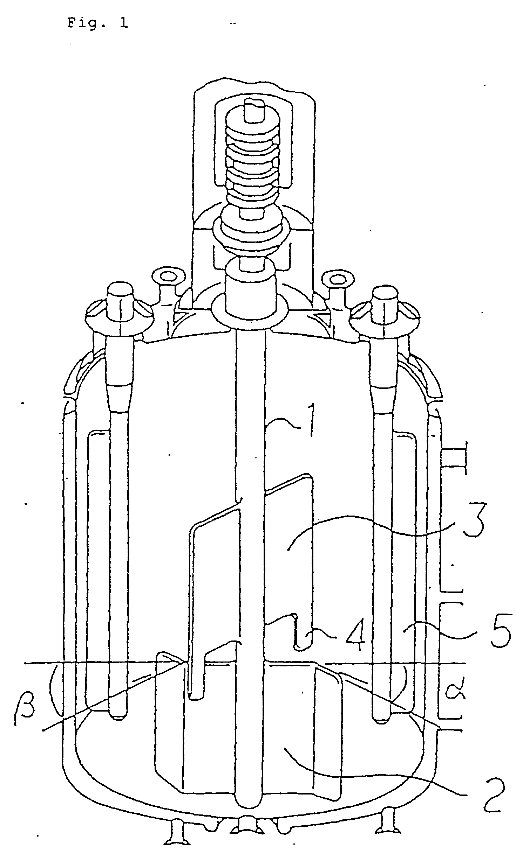

In a 45 m³ polymerization reactor shown in Fig. 1, water (100 parts), sodium dodecylbenzenesulfonate (0.3 parts), sodium bicarbonate (0.3 part), potassium persulfate (1.0 part), a monomer mixture of 1,3-butadiene (35 parts), styrene (61 parts) and acrylic acid (4 parts), and tert.-dodecylmercaptan (0.5 part) as a chain transfer agent were charged and polymerized at 70°C, and the polymerization was terminated when a polymerization conversion reached 97 %. After pH of the resulting copolymer latex was adjusted to 5 using sodium hydroxide, the unreacted monomers were removed by steam distillation to obtain Polymer latex A.

The amount of coagulates in Polymer latex A was less than 0.1 g, and few coagulates were deposited on the inner wall of reactor and the agitation blades. The polymerization stability was excellent.

The average particle size was 180 nm, and the gel content was 55 %.

### Example 2

### Preparation of copolymer latex

In the same manner as in Example 1 except that 1.0 part of α-methylstyrene dimer was used in place of 0.5 part of tert.-dodecylmercaptan, the polymerization was carried out.

In obtained Polymer latex B, the amount of coagulates was less than 0.2 g (0.1 to 0.2 g), and few coagulates were deposited on the inner wall of reactor and the agitation blades. The polymerization stability was excellent.

The average particle size was 165 nm, and the gel content was 65 %.

### Example 3

### Preparation of copolymer latex

In the same manner as in Example 1 except that 1.0 part of terpinolene was used in place of 0.5 part of tert.-dodecylmercaptan, the polymerization was carried out.

In obtained Polymer latex C, the amount of coagulates was less than 0.2 g (0.1 to 0.2 g), and few coagulates were deposited on the inner wall of reactor and the agitation blades. The polymerization stability was excellent.

The average particle size was 160 nm, and the gel content was 70 %.

### Example 4

In the same manner as in Example 1 except that 10 parts of toluene per 100 parts of the monomer mixture was added in the initial stage of polymerization, the polymerization was carried out.

In obtained Polymer latex D, the amount of coagulates was less than 0.1 g, and few coagulates were deposited on the inner wall of reactor and the agitation blades. The polymerization stability was excellent.

The average particle size was 170 nm, and the gel content was 50 %.

### Example 5

In the same manner as in Example 1 except that 7 parts of cyclohexane per 100 parts of the monomer mixture was added in the initial stage of polymerization, the polymerization was carried out.

In obtained Polymer latex E, the amount of coagulates was less than 0.1 g, and few coagulates were deposited on the inner wall of reactor and the agitation blades. The polymerization stability was excellent.

The average particle size was 180 nm, and the gel content was 48 %.

### Comparative Example 1

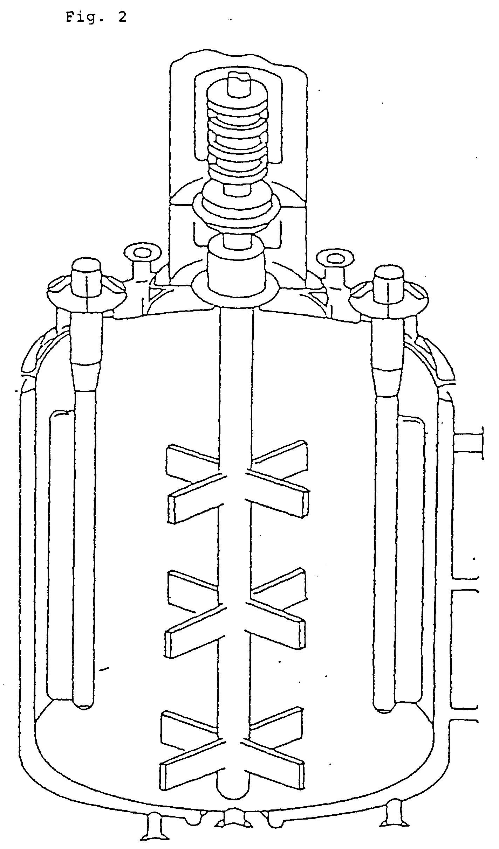

In the same manner as in Example 1 except that a 45 m³ polymerization reactor equipped with three turbine blades as shown in Fig. 2 was used, the polymerization was carried out to obtain Polymer latex a.

In Polymer latex a, the amount of coagulates was 1.7 g, and a large amount of coagulates were deposited on the inner wall of reactor and the agitation blades.

The average particle size was 190 nm, and the gel content was 50 %.

### Comparative Example 2

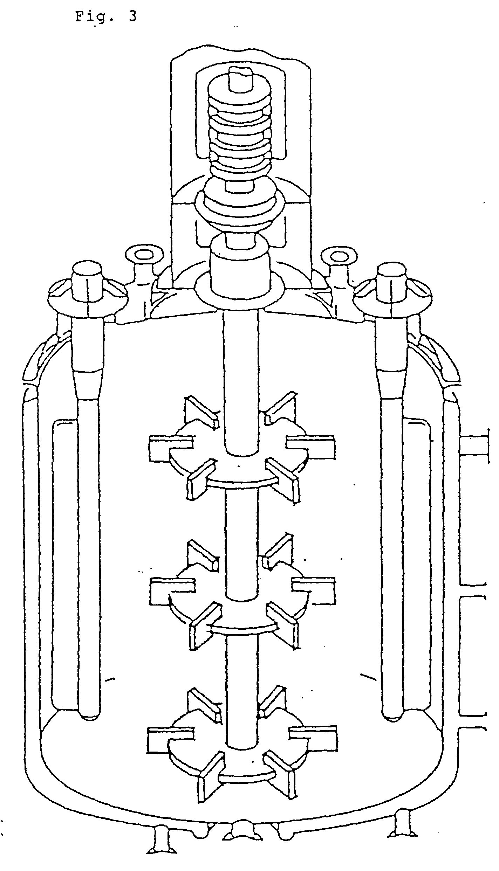

In the same manner as in Example 1 except that a 45 m³ polymerization reactor equipped with three paddle blades as shown in Fig. 3 was used, the polymerization was carried out to obtain Polymer latex b.

In Polymer latex b, the amount of coagulates was 3.2 g, and a very large amount of coagulates were deposited on the inner wall of reactor and the agitation blades.

The average particle size was 185 nm, and the gel content was 55 %.

### Example 6

In the same polymerization reactor as used in Example 1, water (100 parts), polybutadiene latex (60 parts, solid content) and 0.3 part of potassium persulfate were charged. After replacing the internal atmosphere with nitrogen gas, the temperature was raised to 65°C. From this time, a monomer mixture of styrene (28 parts) and acrylonitrile (12 parts), tert.-dodecylmercaptan (0.3 part) and an aqueous emulsifier solution of sodium oleate (0.4 part) in water (20 parts) were continuously charged and polymerized, and the polymerization was terminated when a polymerization conversion reached 98 % to obtain Polymer latex F.

In obtained Polymer latex F, the amount of coagulates was less than 0.1 g, and few coagulates were deposited on the inner wall of reactor and the agitation blades. The polymerization stability was excellent.

### Comparative Example 3

In the same manner as in Example 2 except that a 45 m³ polymerization reactor equipped with three turbine blades as shown in Fig. 2 was used, the polymerization was carried out to obtain Polymer latex c.

In Polymer latex c, the amount of coagulates was 0.9 g, and a very large amount of coagulates were deposited on the inner wall of reactor and the agitation blades.

The average particle size was 170 nm, and the gel content was 60 %.

### Comparative Example 4

In the same manner as in Example 2 except that a 45 m³ polymerization reactor equipped with three paddle blades as shown in Fig. 3 was used, the polymerization was carried out to obtain Polymer latex d.

In Polymer latex d, the amount of coagulates was 1.5 g, and a very large amount of coagulates were deposited on the inner wall of reactor and the agitation blades.

The average particle size was 175 nm, and the gel content was 60 %.

### Example 7

In the same polymerization reactor as used in Example 1, water (150 parts), sodium dodecylbenzenesulfonate (0.5 part), sodium bicarbonate (0.3 part), potassium persulfate (1.0 part), a monomer mixture of 1,3-butadiene (45 parts), styrene (30 parts), methyl methacrylate (10 parts), acrylonitrile (10 parts) and itaconic acid (5 parts), and tert.-dodecylmercaptan (1.2 parts) as a chain transfer agent were charged and polymerized at 70°C, and the polymerization was terminated when a polymerization conversion reached 97 %. After pH of the resulting polymer latex was adjusted to 5 using sodium hydroxide, the unreacted monomers were removed by steam distillation to obtain Polymer latex G.

In obtained Polymer latex G, the amount of coagulates was less than 0.3 g (0.2 to 0.3 g), and few coagulates were deposited on the inner wall of reactor and the agitation blades. The polymerization stability was excellent.

The average particle size was 105 nm, and the gel content was 20 %.

### Example 8

In the same polymerization reactor as used in Example 1, water (90 parts), sodium dodecylbenzenesulfonate (0.2 part), sodium bicarbonate (0.6 part), potassium persulfate (1.0 part), a monomer mixture of 1,3-butadiene (60 parts), styrene (25 parts), methyl methacrylate (5 parts), β-hydroxyethyl acrylate (3 parts) and methacrylic acid (7 parts), and tert.-dodecylmercaptan (0.3 part) as a chain transfer agent were charged and polymerized at 65°C, and the polymerization was terminated when a polymerization conversion reached 97 %. After pH of the resulting polymer latex was adjusted to 5 using sodium hydroxide, the unreacted monomers were removed by steam distillation to obtain Polymer latex H.

In obtained Polymer latex H, the amount of coagulates was less than 0.2 g (0.1 to 0.2 g), and few coagulates were deposited on the inner wall of reactor and the agitation blades. The polymerization stability was excellent.

The average particle size was 250 nm, and the gel content was 55 %.

### EFFECTS OF THE INVENTION

When the polymerization reactor having the specific agitation blades defined by the present invention is used, the amount of fine coagulates can be decreased, and the amount of deposits on the inner walls of reactor and the agitation blades can be decreased in comparison with the conventional production methods.

The polymer latex can be produced in a large scale polymerization reactor having an internal volume of 40 m³ or larger, and the present process is very useful in the industrial production of the polymer latex.

## Claims

1. A process for producing a polymer latex comprising emulsion polymerization of a polymerizable monomer using a polymerization reactor in which an agitation axis 1 that is rotatable from outside of the reactor is installed at a center of said reactor, a bottom paddle 2 having a sweep back angle α of 30 to 60° at its tip end is attached to said agitation axis 1 and installed in a bottom part of the reactor so that its lower edge is close to a bottom wall of the reactor, a flat paddle 3 having a plate-form fin 4 a tip end of which extends downward is attached to said agitation axis 1 at a position above said bottom paddle 2 at a crossing angle β of 40 to 100° with said bottom paddle 2, and at least two baffles 5 extending from the upper part to the lower part of said reactor are provided with a distance on a side wall of said reactor along a direction of said agitation axis.

2. The process for producing a polymer latex according to claim 1, wherein said polymerizable monomer comprises a conjugated diene monomer or a mixture of a conjugated diene monomer and a monomer copolymerizable therewith.

3. The process for producing a polymer latex according to claim 1, wherein said polymerizable monomer is emulsion polymerized in the presence of a rubbery polymer latex.

4. The process for producing a polymer latex according to claim 1, wherein a monomer mixture comprising 10 to 80 % by weight of a conjugated diene monomer, 0.5 to 10 % by weight of an ethylenically unsaturated carboxylic acid monomer, and 10 to 89.5 % by weight of a monomer copolymerizable with these two monomers is emulsion polymerized.

5. The process for producing a polymer latex according to claim 4, wherein a gel content of said polymer latex is from 20 to 90 % by weight.

6. The process for producing a polymer latex according to claim 4, wherein 1.0 parts by weight or less of an emulsifier is used per 100 parts by weight of said monomers.

7. The process for producing a polymer latex according to any one of claims 1 to 6, wherein the emulsion polymerization is carried out in the presence of a cyclic unsaturated hydrocarbon having an unsaturated bond in a ring or a hydrocarbon such as benzene, toluene, hexane or cyclohexane.

8. The process for producing a polymer latex according to any one of claims 1 to 7, wherein said polymerization reactor has an internal volume of at least 40 m³.

## Patentansprüche

1. Verfahren zur Herstellung eines Polymerlatex, umfassend die Emulsionspolymerisation eines polymerisierbaren Monomeren unter Verwendung eines Polymerisationsreaktors, bei dem eine Drehachse (1), die von der Außenseite des Reaktors rotierbar ist, in der Mitte des Reaktors installiert ist, ein Bodenschaufelblatt (2) mit einem Ablenkrückwinkel α von 30-60° an seinem Spitzenende an die Drehachse (1) angefügt ist und im Bodenteil des Reaktors so installiert ist, daß sein unterer Rand sich eng an der Bodenwand des Reaktors befindet, ein flaches Schaufelblatt (3) mit einer plattenförmigen Rippe (4), deren Spitzenende sich nach unten erstreckt, an die Drehachse (1) an einer Position oberhalb des Bodenschaufelblatts (2) mit einem Kreuzungswinkel β von 40-100° mit dem Bodenschaufelblatt (2) angefügt ist, und mindestens zwei Leitbleche (5), die sich von dem oberen Teil bis zum unteren Teil des Reaktors erstrecken, mit einem Abstand auf einer Seitenwand des Reaktors entlang einer Richtung der Drehachse vorgesehen sind.

2. Verfahren zur Herstellung eines Polymerlatex nach Anspruch 1, dadurch **gekennzeichnet**, daß das polymerisierbare Monomere ein konjugiertes Dienmonomeres oder ein Gemisch aus einem konjugierten Dienmonomeren und einem damit copolymerisierbaren Monomeren umfaßt.

3. Verfahren zur Herstellung eines Polymerlatex nach Anspruch 1, dadurch **gekennzeichnet**, daß das polymerisierbare Monomere in Gegenwart eines kautschukartigen Polymerlatex emulsionspolymerisiert wird.

4. Verfahren zur Herstellung eines Polymerlatex nach Anspruch 1, dadurch **gekennzeichnet**, daß das Monomergemisch 10-80 Gew.-% eines konjugierten Dienmonomeren, 0,5-10 Gew.-% eines ethylenisch ungesättigten Carbonsäuremonomeren und 10-89,5 Gew.-% eines mit diesen zwei Monomeren copolymerisierbaren Monomeren emulsionspolymerisiert wird.

5. Verfahren zur Herstellung eines Polymerlatex nach Anspruch 4, dadurch **gekennzeichnet**, daß der Gelgehalt des Polymerlatex 20-90 Gew.-% beträgt.

6. Verfahren zur Herstellung eines Polymerlatex nach Anspruch 4, dadurch **gekennzeichnet**, daß 1,0 Gew.-Teile oder weniger Emulgator pro 100 Gew.-Teile der Monomeren verwendet werden.

7. Verfahren zur Herstellung eines Polymerlatex nach einem der Ansprüche 1-6, dadurch **gekennzeichnet**, daß die Emulsionspolymerisation in Gegenwart eines cyclischen ungesättigten Kohlenwasserstoffs mit einer ungesättigten Bindung in einem Ring oder eines Kohlenwasserstoffs, wie Benzol, Toluol, Hexan oder Cyclohexan, verwendet werden.

8. Verfahren zur Herstellung eines Polymerlatex nach einem der Ansprüche 1-7, dadurch **gekennzeichnet**, daß der Polymerisationsreaktor ein Innenvolumen von mindestens 40 m³ hat.

## Revendications

1. Procédé de production d'un latex de polymère comprenant l'étape consistant à effectuer une polymérisation en émulsion d'un monomère polymérisable en utilisant un réacteur de polymérisation dans lequel un axe d'agitation 1 que l'on peut faire tourner de l'extérieur du réacteur est installé au centre dudit réacteur, une pale inférieure 2 ayant un angle α d'inclinaison de son bord d'attaque de 30 à 60° est attachée audit axe d'agitation 1 et installée dans une partie inférieure du réacteur de façon à ce que son arête inférieure soit proche d'une paroi de fond du réacteur, une pale plate 3 ayant une ailette en forme de plaque 4 dont une tête est dirigée vers le bas est attachée audit axe d'agitation 1 en un emplacement situé au dessus de ladite pale inférieure 2 de manière à former avec ladite pale inférieure 2 un angle β de 40 à 100°, et au moins deux déflecteurs 5 allant de la partie supérieure à la partie inférieure dudit réacteur, espacés d'une paroi latérale dudit réacteur, sont placés suivant la direction dudit axe d'agitation.

2. Procédé de production d'un latex de polymère selon la revendication 1, dans lequel ledit monomère polymérisable comprend un monomère de type diène conjugué ou un mélange d'un monomère de type diène conjugué et d'un monomère copolymérisable avec celui-ci.

3. Procédé de production d'un latex de polymère selon la revendication 1, dans lequel on polymérise en émulsion ledit monomère polymérisable en présence d'un latex de polymère caoutchouteux.

4. Procédé de production d'un latex de polymère selon la revendication 1, dans lequel on polymérise en émulsion un mélange de monomères comprenant 10 à 80% en poids d'un monomère de type diène conjugué, 0,5 à 10% en poids d'un monomère de type acide carboxylique éthyléniquement insaturé et 10 à 89,5% en poids d'un monomère copolymérisable avec ces deux monomères.

5. Procédé de production d'un latex de polymère selon la revendication 4, dans lequel la teneur en gel dudit latex de polymère est de 20 à 90% en poids.

6. Procédé de production d'un latex de polymère selon la revendication 4, dans lequel on utilise 1,0 partie en poids ou moins d'un agent émulsionnant pour 100 parties en poids desdits monomères.

7. Procédé de production d'un latex de polymère selon l'une quelconque des revendications 1 à 6, dans lequel on effectue la polymérisation en émulsion en présence d'un hydrocarbure cyclique insaturé ayant une liaison insaturée dans un cycle ou d'un hydrocarbure comme le benzène, le toluène, l'hexane ou le cyclohexane.

8. Procédé de production d'un latex de polymère selon l'une quelconque des revendications 1 à 7, dans lequel ledit réacteur de polymérisation a un volume interne d'au moins 40 m³.
